(19) Europäisches Patentamt
European Patent Office
Office européen des brevets

(11) **EP 2 930 612 A2**

# (12) EUROPEAN PATENT APPLICATION

(43) Date of publication:
**14.10.2015 Bulletin 2015/42**

(51) Int Cl.:
***G06F 9/345*** *(2006.01)* ***G06F 9/30*** *(2006.01)*

(21) Application number: **15152752.0**

(22) Date of filing: **27.01.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **11.04.2014 US 201414251117**

(71) Applicant: **FUJITSU LIMITED**
**Kawasaki-shi,**
**Kanagawa 211-8588 (JP)**

(72) Inventors:
• **Michishita, Hiroshi**
**Sunnyvale, CA 94085 (US)**
• **Tomono, Mitsuru**
**Sunnyvale, CA 94085 (US)**

(74) Representative: **Wilding, Frances Ward**
**Haseltine Lake LLP**
**Lincoln House, 5th Floor**
**300 High Holborn**
**London WC1V 7JH (GB)**

## (54) Rotating register file with bit expansion support

(57) A method and system for implementing rotating register files with bit expansion support may enable a plurality of register pointers, each with a respective increment value, to be implemented in a register file of a processor. The register pointers may correspond to different regions of the register file. Each region of the register file may have a different size.

FIG. 2

**Description**

## BACKGROUND

### Field of the Disclosure

The present disclosure relates to rotating register files and, specifically, to rotating register files with bit expansion support.

### Description of the Related Art

In processor architectures designed to employ parallelism, very long instruction word (VLIW) architectures are known for having relatively simple hardware complexity and enabling various functionality through compiler software, such as software pipelining, where the program includes the decisions that determine how instructions are executed in parallel. With software pipelining, scheduling decisions may be made in a VLIW architecture at compile time.

In some VLIW processor designs, rotating register files are used to facilitate writing loop unrolling code by providing hardware support using a register pointer for physical index conversion. As the register pointer is incremented, the physical register mapping is incremented by a fixed amount for loop increments. However, such conventional rotating register files may not be well suited when data expansion occurs within a loop, such as multiplication of two 16-bit data values resulting in a 32-bit data value, which may involve different update increment values for the register pointer. One known solution has been to use two separate register files with respective separate register pointers, for example, one for 16-bit data and another for 32-bit data. However, such a scheme using different register files may not be economical in terms of hardware resource efficiency. Accordingly, there is a need in the art for a flexible rotating register file that is not limited to a fixed register pointer increment.

## SUMMARY

In an embodiment of one aspect, a disclosed method for accessing a rotating register file with bit expansion support in a processor includes dividing a register file into a plurality of regions, assigning a plurality of register pointers respectively to each of the regions, and assigning a plurality of increment values respectively to each of the register pointers. During execution of processor instructions, the method may include incrementing the register pointers respectively according to the increment values.

In an embodiment of another aspect, a disclosed method of using a rotating register file with bit expansion support in a processor includes setting a plurality of increment values respectively for each of a plurality of register pointers. The plurality of increment values may include at least two different values. The method may include setting a plurality of regions of a register file respectively for each of the register pointers. Responsive to incrementing an instruction pointer for a next instruction, the method may include determining which of the register pointers corresponds to a virtual register number for the next instruction, calculating a physical register number in the register file, and rotating the register pointers through each of the regions respectively according to the increment values.

Additional disclosed aspects for implementing a rotating register file with bit expansion support include non-transitory computer-readable memory media storing instructions executable in a processor, and a memory accessible to the processor storing executable instructions, and a processor implementing a rotating register file with bit expansion support.

## BRIEF DESCRIPTION OF THE DRAWINGS

The invention is described, by way of example only, with reference to the following drawings, in which:

FIG. 1 is a block diagram of selected elements of an embodiment of a rotating register file with bit expansion support;

FIG. 2 is a flowchart depicting selected elements of an embodiment of a method for accessing a rotating register file with bit expansion support;

FIG. 3 is a flowchart depicting selected elements of an embodiment of a method for using a rotating register file with bit expansion support; and

FIG. 4 is a block diagram of selected elements of a processor implementing a rotating register file with bit expansion support.

## DESCRIPTION OF PARTICULAR EMBODIMENT(S)

In the following description, details are set forth by way of example to facilitate discussion of the disclosed subject matter. It should be apparent to a person of ordinary skill in the field, however, that the disclosed embodiments are exemplary and not exhaustive of all possible embodiments.

Throughout this disclosure, a hyphenated form of a reference numeral refers to a specific instance of an element and the un-hyphenated form of the reference numeral refers to the element generically or collectively. Thus, for example, widget 12-1 refers to an instance of a widget class, which may be referred to collectively as widgets 12 and any one of which may be referred to generically as a widget 12.

In a conventional rotating register file, a physical index to a register file in a processor may be calculated using a virtual register index and a register pointer. The register pointer may be incremented by 1 at each process execution, causing the physical indices to rotate through the register file. Such functionality may be useful for software optimizations, such as loop unrolling and/or software pipelining.

Thus, conventional rotating register files may be limited to a fixed register pointer increment, which may be disadvantageous for certain kinds of looped operations, such as when data expansion occurs within a loop. As will be described herein, the inventors of the present disclosure have discovered a rotating register file with bit expansion support. The rotating register file with bit expansion support described herein may enable dividing a rotating register file into arbitrary regions and may assign different register pointer to each divided region. Each of the register pointers may have different update increments, such as 0, 1, or 2, depending on a desired data bit width and a corresponding program attribute. In this manner, registers may be flexibly assigned using desired regions according to individual program requirements. Using the rotating register file with bit expansion support described herein, a single rotating register file may be used to handle 2, 4, 8, etc. sets of registers or may remain undivided with a single set using all the registers.

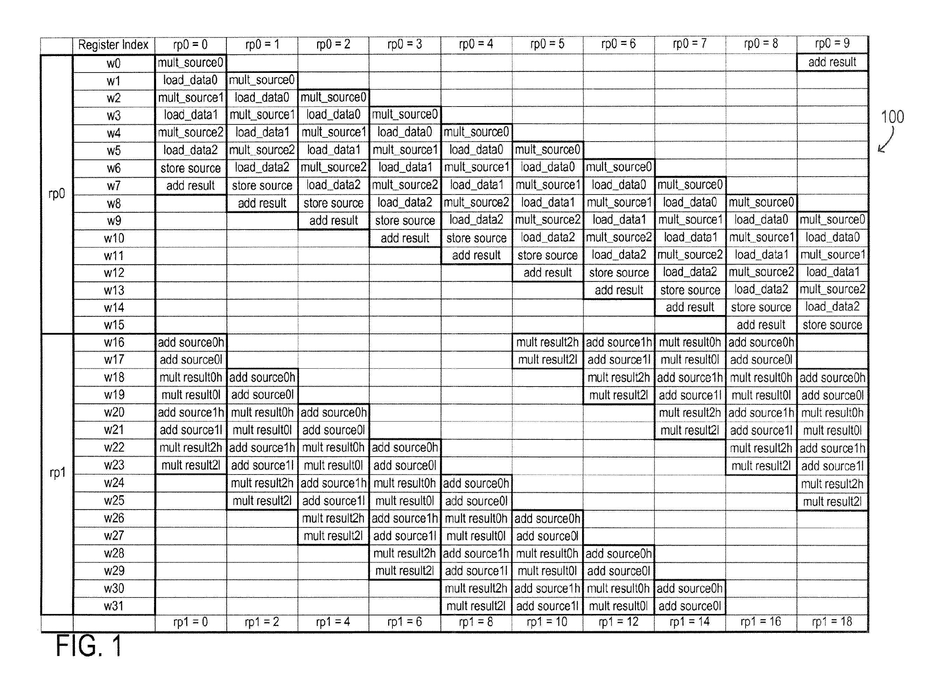

Turning now to the drawings, FIG. 1 is a block diagram showing selected elements of an embodiment of register file 100, which is a rotating register file with bit expansion support, as described herein. In one embodiment, register file 100 is implemented in a VLIW processor architecture.

As shown in FIG. 1, register file 100 includes 32 register entries, represented by virtual indices w0 through w31. It will be understood that register file 100 is shown in a given configuration for descriptive purposes and that, in different embodiments, register file 100 may be dimensioned with different numbers of entries. Register file 100 is further shown divided into two regions, each corresponding to a respective register pointer. Specifically, in FIG. 1, register pointer rp0 represents a pointer for a first region of virtual indices w0 through w15 and is incremented by 1 to accommodate 16-bit data values. Although in the exemplary embodiment of register file 100 shown in FIG. 1, the register file is divided into two regions, it is noted that in different embodiments, different number of regions, each region having a different size, and corresponding register pointers may be implemented. Register pointer rp1 represents a pointer for a second region of virtual indices w16 through w32 and is incremented by 2 to accommodate 32-bit data values. Thus, register file 100 is implemented with bit expansion support to handle both 16-bit data values and 32-bit data values in a single register file.

In the example embodiment of register file 100 shown in FIG. 1, a code example with loop unrolling including a 16-bit multiply operation, a 32-bit add operation, and a 16-bit bit shift operation is implemented. The code example may correspond to operations typically performed in a Fast Fourier Transform (FFT) operation. Program 1 below shows code in C-language syntax that may correspond to the code example implemented in register file 100, while Program 2 below shows assembly code corresponding to the same code example.

**Program 1: C-code with loop unrolling**

```
for (i=0; i < N; i++) {
    r0 = b[i] * c[i] ;
    r1 = b[i] * d[i] ;
    a[i] = (r0 + r1) >> 16;
}
```

**Program 2: Assembly-code with loop unrolling**

```
L1: loop 0 to N-1
load.iu r5, addr0, 8;
load.iu r7, addr1, 8;
load.iu r9, addr2, 8;
```

(continued)

```
mult_hp r18, r19, r5, r7;
mult_hp r22, r23, r5, r9;
add_hp_c r11, r18, r19, r22, r23;
store.iu r11, addr3, 8;
goto L1;
```

In Program 2, load.iu is a load data with immediate address update command, mult_hp is a multiply high precision command, add_hp_c is an add high precision and cut command, and store. iu is a store data with immediate address update command. In certain instances, Program 2 may be implemented in an 8-way VLIW architecture using register file 100. An example of an 8-way VLIW pipeline is shown in Table 1, which may include 4 load/store words, 2 multiply words, 1 arithmetic logic word, and 1 register pointer update word.

**Table 1: 8-way Very Long Instruction Word Pipeline**

| LD/ST | LD/ST | LD/ST | MULT | MULT | ALU | LD/ST | rp_update |
|---|---|---|---|---|---|---|---|
| load/store | load/store | load/store | multiply | multiply | arithmetic logic | load/store | register pointer update |

Program 3 shows how an implementation of the loop body of Program 2, comprising 7 operations, is assigned to an 8-way VLIW where 1 of the 8 ways is reserved for the register pointer update.

**Program 3: 8-way VLIW assembly-code for register file 100**

```
{load.iu w1, addr0, 8; load.iu w3, addr1, 8; load.iu w5, addr2, 8; mult_hp w18, w19, w2, w0; mult_hp w22, w23, w2,
w0; add_hp_c w7, w16, w17, w20, w21; store.iu w6, addr3, 8; rp_update}
```

As evident in Program 3, using register file 100, the loop body of Program 2 may be executed in parallel, since register file 100 has been divided to support both 16-bit and 32-bit data values. In FIG. 1, register file 100 shows how the register values are rotated as the loop unrolls with each iteration. In particular, rp0 is incremented by 1 with corresponding register file entries rotating by one 16-bit value, while rp1 is incremented by 2 with corresponding register file entries rotating by two 16-bit values or a 32-bit value, within register file 100.

As shown in FIG. 1, calculation of a physical register entry in register file 100 may be performed according to Equation 1, in which '%' represents the modulo operator.

$$Register\ Entry = Offset + \{VirtualRegisterNumber - Offset + AssignedRegisterNumber\}$$
$$\%NumberofAssignedRegisters$$

**Equation 1: Register Entry Calculation**

For example, using Equation 1 for register index w7 at rp0=9, the following values may result in a register entry = 0:

Offset=0;
VirtualRegisterNumber=7;
AssignedRegisterPointer=9; and
NumberofAssignedRegisters=16.

In another example, using Equation 1 for register index w18 at rp1=18, the following values may result in a register entry = 20:

Offset=16;
VirtualRegisterNumber= 18;
AssignedRegisterPointer=18; and
NumberofAssignedRegisters=16.

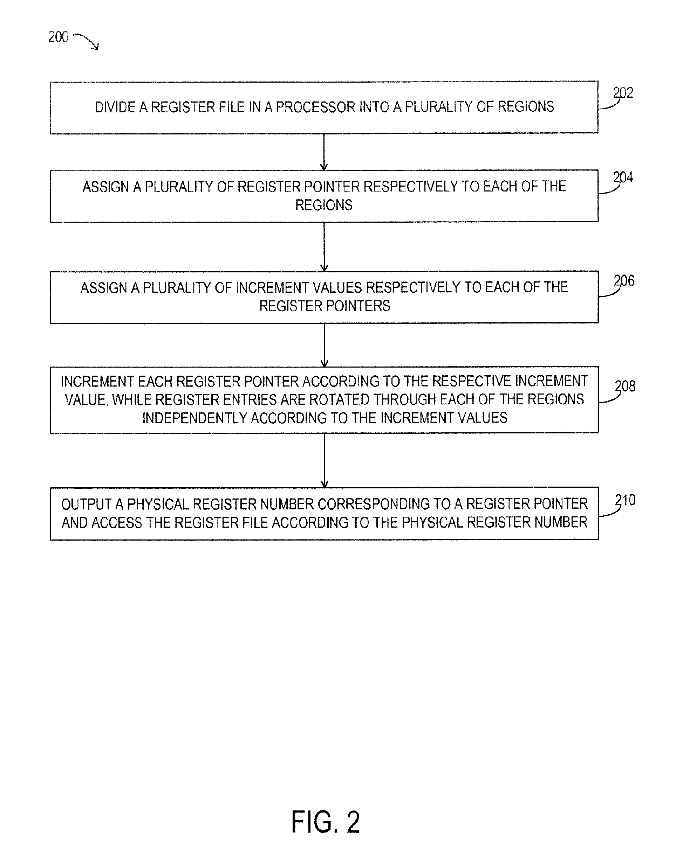

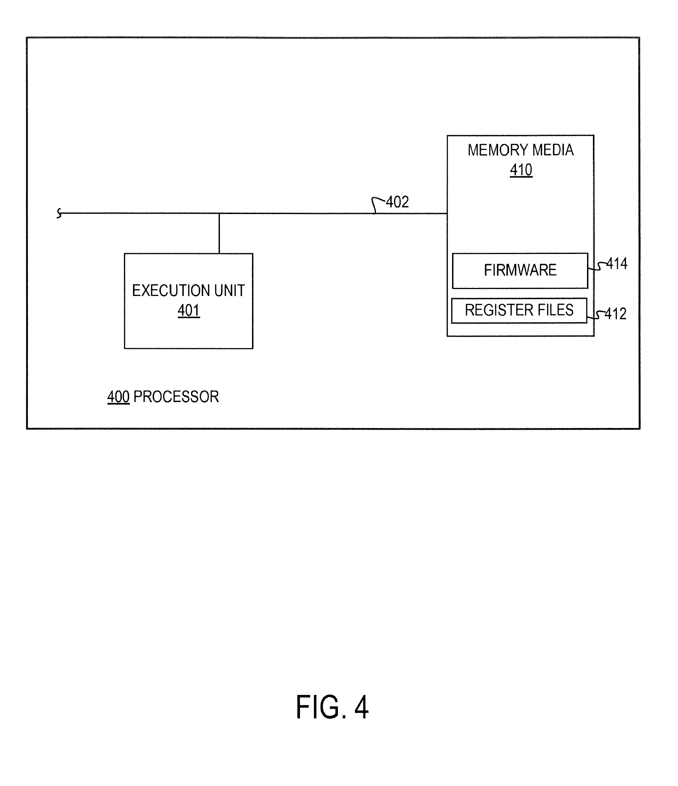

Referring now to FIG. 2, a block diagram of selected elements of an embodiment of method 200 for accessing a rotating register file with bit expansion support. Method 200 may be performed by a processor (see FIG. 4), for example, a processor having a VLIW architecture. In certain embodiments, instructions to perform method 200 are stored as firmware in a processor and accessed by an execution unit for execution to configure the processor. It is noted that certain operations depicted in method 200 may be rearranged or omitted, as desired.

Method 200 may begin by dividing (operation 202) a register file in a processor into a plurality of regions. A plurality of register pointers may be respectively assigned (operation 204) to each of the regions. A plurality of increment values may be respectively assigned (operation 206) to each of the register pointers. The increment values may include at least two different increment values. The increment values may include a zero increment value. Each register pointer may be incremented (operation 208) according to the respective increment value, while register entries are rotated through each of the regions independently according to the increment values. A physical register number corresponding to a register pointer may be output (operation 210) and the register file may be accessed (operation 210) according to the physical register number.

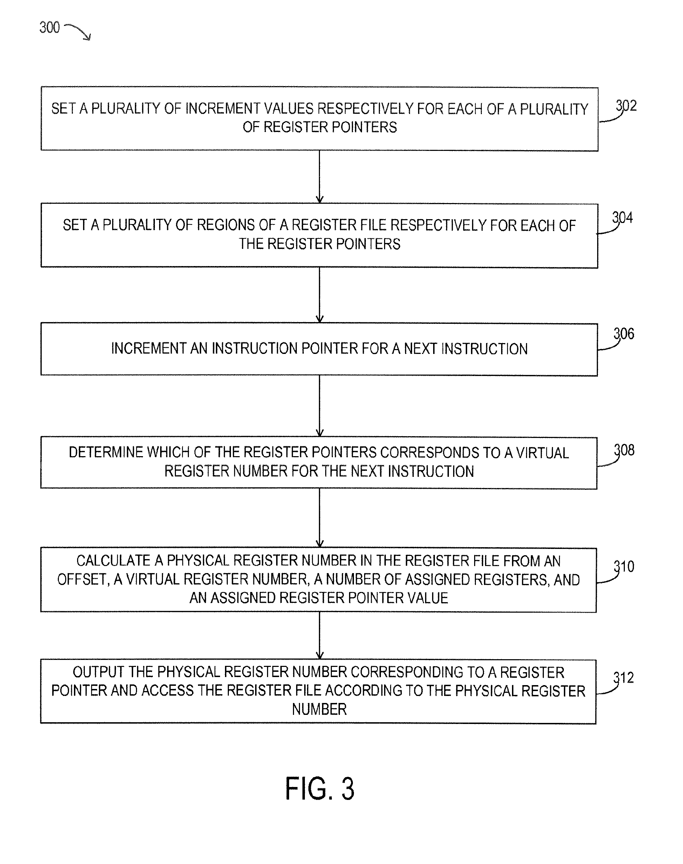

Turning now to FIG. 3, a block diagram of selected elements of an embodiment of method 300 for accessing a rotating register file with bit expansion support. Method 300 may be performed by a processor (see FIG. 4), for example, a processor having a VLIW architecture. In certain embodiments, instructions to perform method 300 are stored as firmware in a processor and accessed by an execution unit for execution to configure the processor. It is noted that certain operations depicted in method 300 may be rearranged or omitted, as desired.

Method 300 may begin by setting (operation 302) a plurality of increment values respectively for each of a plurality of register pointers. Then, a plurality of regions of a register file may be set (operation 304) respectively for each of the register pointers. An instruction pointer may be increment (operation 306) for a next instruction. Method 300 may then determine (operation 308) which of the register pointers corresponds to a virtual register number for the next instruction. A physical register number may be calculated (operation 310) from an offset, a virtual register number, a number of assigned registers, and an assigned register pointer value. The physical register number corresponding to a register pointer may be output (operation 312) and the register file may be accessed (operation 312) according to the physical register number.

Referring now to FIG. 4, a block diagram showing selected elements of an embodiment of processor 400 for implementing a rotating register file with bit expansion support is illustrated. In various embodiments, processor 400 may have a VLIW architecture and may implement software pipelining. As depicted in FIG. 4, processor 400 includes execution 401 and memory media 410, which may communicate using processor bus 402.

As shown in FIG.4, memory media 410 may represent volatile, non-volatile, fixed, and/or removable media, and may be implemented using magnetic and/or semiconductor memory. Memory media 410 is capable of storing instructions and/or data. As shown, memory media 410 stores instructions (i.e., code executable by execution unit 401) including firmware 414, which may implement the methods described herein to configure processor 400, for example for using and/or access rotating register files with bit expansion support. Register files 412 may represent memory elements used to implement processor registers and register files.

As disclosed herein, a method and system for implementing rotating register files with bit expansion support may enable a plurality of register pointers, each with a respective increment value, to be implemented in a register file of a processor. The register pointers may correspond to different regions of the register file. Each region of the register file may have a different size.

The above disclosed subject matter is to be considered illustrative, and not restrictive, and the appended claims are intended to cover all such modifications, enhancements, and other embodiments which fall within the true spirit and scope of the present disclosure. Thus, to the maximum extent allowed by law, the scope of the present disclosure is to be determined by the broadest permissible interpretation of the following claims and their equivalents, and shall not be restricted or limited by the foregoing detailed description.

**Claims**

1. A method for accessing a rotating register file with bit expansion support in a processor, comprising:

    dividing a register file into a plurality of regions;
    assigning a plurality of register pointers respectively to each of the regions;
    assigning a plurality of increment values respectively to each of the register pointers; and
    during execution of processor instructions, incrementing the register pointers respectively according to the increment values.

2. The method of claim 1, wherein the processor includes a very long instruction word (VLIW) architecture, and wherein incrementing the register pointers includes:

rotating the register entries through each of the regions respectively according to the increment values.

3. The method of any preceding claim, wherein the plurality of increment values includes at least two different values, and wherein the plurality of regions includes at least two regions having different sizes.

4. A method of using a rotating register file with bit expansion support in a processor, comprising:

setting a plurality of increment values respectively for each of a plurality of register pointers wherein the plurality of increment values includes at least two different values;
setting a plurality of regions of a register file respectively for each of the register pointers;
responsive to incrementing an instruction pointer for a next instruction:

determining which of the register pointers corresponds to a virtual register number for the next instruction;
calculating a physical register number in the register file; and
rotating the register pointers through each of the regions respectively according to the increment values.

5. The method of claim 4, wherein calculating the physical register number includes:

calculating the physical register number using an offset, a virtual register number, a number of assigned pointers, a number of assigned registers, and an assigned register pointer value.

6. The method of claim 4 or claim 5, wherein the plurality of regions includes at least two regions having different sizes.

7. The method of any preceding claim, further comprising:

outputting a physical register number corresponding to a register pointer; and
accessing the register file according to the physical register number.

8. The method of any preceding claim, wherein the plurality of increment values includes at least one zero value.

9. A program which, when executed on a computer, causes the computer to carry out the method according to any preceding claim.

10. Non-transitory computer-readable media for accessing a rotating register file with bit expansion support in a processor, the computer-readable media storing instructions executable by the processor for causing the processor to:

divide a register file into a plurality of regions;
assign a plurality of register pointers respectively to each of the regions;
assign a plurality of increment values respectively to each of the register pointers; and
incrementing the register pointers respectively according to the increment values.

11. The computer-readable media of claim 10, wherein the processor includes a very long instruction word (VLIW) architecture, and wherein the instructions to increment the register pointers include instructions to:

rotate the register entries through each of the regions respectively according to the increment values.

12. The computer-readable media of claim 10 or claim 11, wherein the plurality of increment values includes at least two different values, and wherein the plurality of regions includes at least two regions having different sizes.

13. Non-transitory computer-readable media for using a rotating register file with bit expansion support in a processor, the computer-readable media storing instructions executable by the processor for causing the processor to carry out the method according to any of claims 4 - 6.

14. The computer-readable media of any of claims 10 - 13, wherein the plurality of increment values includes at least one zero value.

15. The computer-readable media of any of claims 10 - 14, further comprising instructions to:

output a physical register number corresponding to a register pointer; and
access the register file according to the physical register number.

| | Register Index | rp0 = 0 | rp0 = 1 | rp0 = 2 | rp0 = 3 | rp0 = 4 | rp0 = 5 | rp0 = 6 | rp0 = 7 | rp0 = 8 | rp0 = 9 |
|---|---|---|---|---|---|---|---|---|---|---|---|
| rp0 | w0 | mult_source0 | | | | | | | | | add result |
| | w1 | load_data0 | mult_source0 | | | | | | | | |
| | w2 | mult_source1 | load_data0 | mult_source0 | | | | | | | |
| | w3 | load_data1 | mult_source1 | load_data0 | mult_source0 | | | | | | |
| | w4 | mult_source2 | load_data1 | mult_source1 | load_data0 | mult_source0 | | | | | |
| | w5 | load_data2 | mult_source2 | load_data1 | mult_source1 | load_data0 | mult_source0 | | | | |
| | w6 | store source | load_data2 | mult_source2 | load_data1 | mult_source1 | load_data0 | mult_source0 | | | |
| | w7 | add result | store source | load_data2 | mult_source2 | load_data1 | mult_source1 | load_data0 | mult_source0 | | |
| | w8 | | add result | store source | load_data2 | mult_source2 | load_data1 | mult_source1 | load_data0 | mult_source0 | |
| | w9 | | | add result | store source | load_data2 | mult_source2 | load_data1 | mult_source1 | load_data0 | mult_source0 |
| | w10 | | | | add result | store source | load_data2 | mult_source2 | load_data1 | mult_source1 | load_data0 |
| | w11 | | | | | add result | store source | load_data2 | mult_source2 | load_data1 | mult_source1 |
| | w12 | | | | | | add result | store source | load_data2 | mult_source2 | load_data1 |
| | w13 | | | | | | | add result | store source | load_data2 | mult_source2 |
| | w14 | | | | | | | | add result | store source | load_data2 |
| | w15 | | | | | | | | | add result | store source |
| rp1 | w16 | add source0h | | | | | mult result2h | add source1h | mult result0h | add source0h | |
| | w17 | add source0l | | | | | mult result2l | add source1l | mult result0l | add source0l | |
| | w18 | mult result0h | add source0h | | | | | mult result2h | add source1h | mult result0h | add source0h |
| | w19 | mult result0l | add source0l | | | | | mult result2l | add source1l | mult result0l | add source0l |
| | w20 | add source1h | mult result0h | add source0h | | | | | mult result2h | add source1h | mult result0h |
| | w21 | add source1l | mult result0l | add source0l | | | | | mult result2l | add source1l | mult result0l |
| | w22 | mult result2h | add source1h | mult result0h | add source0h | | | | | mult result2h | add source1h |
| | w23 | mult result2l | add source1l | mult result0l | add source0l | | | | | mult result2l | add source1l |
| | w24 | | mult result2h | add source1h | mult result0h | add source0h | | | | | mult result2h |
| | w25 | | mult result2l | add source1l | mult result0l | add source0l | | | | | mult result2l |
| | w26 | | | mult result2h | add source1h | mult result0h | add source0h | | | | |
| | w27 | | | mult result2l | add source1l | mult result0l | add source0l | | | | |
| | w28 | | | | mult result2h | add source1h | mult result0h | add source0h | | | |
| | w29 | | | | mult result2l | add source1l | mult result0l | add source0l | | | |
| | w30 | | | | | mult result2h | add source1h | mult result0h | add source0h | | |
| | w31 | | | | | mult result2l | add source1l | mult result0l | add source0l | | |
| | | rp1 = 0 | rp1 = 2 | rp1 = 4 | rp1 = 6 | rp1 = 8 | rp1 = 10 | rp1 = 12 | rp1 = 14 | rp1 = 16 | rp1 = 18 |

100

FIG. 1

EP 2 930 612 A2

200

DIVIDE A REGISTER FILE IN A PROCESSOR INTO A PLURALITY OF REGIONS | 202

ASSIGN A PLURALITY OF REGISTER POINTER RESPECTIVELY TO EACH OF THE REGIONS | 204

ASSIGN A PLURALITY OF INCREMENT VALUES RESPECTIVELY TO EACH OF THE REGISTER POINTERS | 206

INCREMENT EACH REGISTER POINTER ACCORDING TO THE RESPECTIVE INCREMENT VALUE, WHILE REGISTER ENTRIES ARE ROTATED THROUGH EACH OF THE REGIONS INDEPENDENTLY ACCORDING TO THE INCREMENT VALUES | 208

OUTPUT A PHYSICAL REGISTER NUMBER CORRESPONDING TO A REGISTER POINTER AND ACCESS THE REGISTER FILE ACCORDING TO THE PHYSICAL REGISTER NUMBER | 210

# FIG. 2

300

SET A PLURALITY OF INCREMENT VALUES RESPECTIVELY FOR EACH OF A PLURALITY OF REGISTER POINTERS — 302

SET A PLURALITY OF REGIONS OF A REGISTER FILE RESPECTIVELY FOR EACH OF THE REGISTER POINTERS — 304

INCREMENT AN INSTRUCTION POINTER FOR A NEXT INSTRUCTION — 306

DETERMINE WHICH OF THE REGISTER POINTERS CORRESPONDS TO A VIRTUAL REGISTER NUMBER FOR THE NEXT INSTRUCTION — 308

CALCULATE A PHYSICAL REGISTER NUMBER IN THE REGISTER FILE FROM AN OFFSET, A VIRTUAL REGISTER NUMBER, A NUMBER OF ASSIGNED REGISTERS, AND AN ASSIGNED REGISTER POINTER VALUE — 310

OUTPUT THE PHYSICAL REGISTER NUMBER CORRESPONDING TO A REGISTER POINTER AND ACCESS THE REGISTER FILE ACCORDING TO THE PHYSICAL REGISTER NUMBER — 312

FIG. 3

MEMORY MEDIA
410

402

FIRMWARE — 414

REGISTER FILES — 412

EXECUTION UNIT
401

400 PROCESSOR

FIG. 4